(19) Europäisches Patentamt

European Patent Office

Office européen des brevets

(11) Veröffentlichungsnummer: **0 313 116 B1**

# EUROPÄISCHE PATENTSCHRIFT

(45) Veröffentlichungstag der Patentschrift: **04.08.93**

(51) Int. Cl.⁵: **B09B 5/00**

(21) Anmeldenummer: **88201765.0**

(22) Anmeldetag: **18.08.88**

(54) **Verfahren zur Aufbereitung von kontaminierten Böden.**

(30) Priorität: **22.10.87 DE 3735788**
**06.05.88 DE 3815461**

(43) Veröffentlichungstag der Anmeldung:
**26.04.89 Patentblatt 89/17**

(45) Bekanntmachung des Hinweises auf die
Patenterteilung:
**04.08.93 Patentblatt 93/31**

(84) Benannte Vertragsstaaten:
**AT BE CH DE FR GB IT LI NL SE**

(56) Entgegenhaltungen:
**EP-A- 0 170 862**
**EP-A- 0 185 831**
**DE-A- 3 206 984**
**DE-B- 1 262 741**
**US-A- 4 336 136**

**J.E. GARNETT et al.: "Initial testing of pilot
scale equipment for soil decontamination",
REP. 3002, TIC-4500, DE-AC 04-76D, P03 533,
17. Oktober 1980, Rockwell International,
Golden, Colorade, US**

**IDEM**

**N.L. WEISS: "SME mineral processing handbook", Band 1, 1985, Society of Mining Engineers, New York, US**

**MINING & MINERALS ENGINEERING, Band 3,
Nr. 10, Oktober 1967; B. MARECHAL: "The
effect of rotational speed in autogenous
grinding", Seiten 378-388**

(73) Patentinhaber: **METALLGESELLSCHAFT AG**
**Postfach 10 15 01, Reuterweg 14**
**W-6000 Frankturt/M.1(DE)**

(72) Erfinder: **Cappel, Fred, Dr.**
**Schopenhauer Strasse 13**
**W-6072 Dreieich(DE)**
Erfinder: **Hankel, Dirk, Dr.**
**Wiesenstrasse 3**
**W-6052 Mühlheim 3(DE)**
Erfinder: **Meiler, Heinrich**
**Bornstrasse 65**
**W-6238 Hofheim 7(DE)**
Erfinder: **Rosenstock, Friedrich**
**Alt-Bornheim 7-9**
**W-6000 Frankturt am Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Aufbereitung von kontaminierten Böden durch Agitation in wäßriger Aufschlämmung in einer Trommel und Trennung des Austrages der Trommel in gröbere und feinere Fraktionen.

Die Dekontaminierung von Böden oder Halden, die durch Kohlenwasserstoffe, Öl oder Schwermetalle verunreinigt sind, ist sehr aufwendig. Deshalb wird auch vorgeschlagen, durch eine Aufbereitung diese Böden in einen nicht oder nur gering verunreinigten Teil und in einen Teil zu trennen, der den größten Teil der Verunreinigung in konzentrierter Form enthält. Die Dekontaminierung dieses Teiles ist dann wesentlich billiger und einfacher.

Aus J.E. Garnett, D.L. Mitchell, P.T. Faccini "Initial Testing of Pilot Equipment for Soil Decontamination", REP-3022, TIC-4500, DE-AC 04-76D P03 533, U.S. Department of Energy, October 17, 1980 ist es bekannt, durch Plutonium-beladenes Öl verunreinigte Böden durch eine nasse Aufbereitung zu behandeln. Dabei werden die feinkörnigen Bodenbestandteile, mit denen das Plutonium assoziiert ist, von den gröberen Bestandteilen abgetrennt. Der Boden wird zunächst in einem Trommelwäscher behandelt, in dem trockene Aggregate aufgebrochen und Öl von Kies und grobem Sand abgewaschen werden. Die Wäsche erfolgt mit einer wäßrigen NaOH-Lösung mit pH 11. Zur besseren Agitation der Aufschlämmung ist die Trommel mit kleinen Schaufeln ausgerüstet. Die Trommel ist am Austrag mit einem Sieb versehen, das rund 50 % als Überkorn + 4 mm abstößt. Das Unterkorn wird auf ein Sieb bei 0,5 mm Korngröße abgesiebt und die Fraktion + 0,5 mm abgestoßen. Die Fraktion - 0,5 mm wird durch Hydrozyklonierung und Zentrifugierung in eine Fraktion + 0,05 mm und eine Fraktion - 0,05 mm getrennt. Die Fraktion - 0,05 mm wird durch Ausflockung und Zentrifugierung in Feststoff und Waschflüssigkeit getrennt, die wieder in den Trommelwäscher und die Siebung geleitet wird. Dieses Verfahren führte jedoch nicht zu einer befriedigenden Dekontaminierung des Bodens.

Der Erfindung liegt die Aufgabe zugrunde, verunreinigte Böden oder Halden in möglichst wirtschaftlicher Weise so aufzubereiten, daß ein möglichst großer Teil in wiederverwendbarer Form oder gefahrloser Deponierbarkeit anfällt, und die Verunreinigungen in einen möglichst kleinen Rest angesammelt werden.

Eine Lösung dieser Aufgabe erfolgt erfindungsgemäß dadurch, daß die kontaminierten Böden in einer Trommel mit einer Netto-Energieaufnahme von 4 bis 16 kWh/t Durchsatz unter Zusatz von losen Brocken nach Art von Mahlkörpern behandelt werden, wobei die Drehzahl 50 - 90 % der kritischen Drehzahl ($n_{krit}$) von

$$n_{krit} = \frac{42,4}{\sqrt{D}} \ (min^{-1})$$

beträgt, die aus der Trommel ausgetragene wäßrige Aufschlämmung durch Siebung in eine gröbere und eine feinere Fraktion getrennt wird, die gröbere Fraktion als gereinigte Fraktion abgeführt wird, die feinere Fraktion entschlämmt wird, der abgetrennte Schlamm nach einer Entwässerung als Schadstoffkonzentrat abgeführt wird, und der entschlämmte Rest der feineren Fraktion nach einer Entwässerung als gereinigter Boden abgeführt wird. Der Ausdruck "Böden" wird für alle Materialien verwendet, die sich durch das Verfahren aufbereiten lassen, z.B. auch für Halden. Die Böden werden, je nach Beschaffenheit, vor dem Einsatz in die Trommel durch eine Schrott- und Stein-Abscheidung geleitet. Die maximale Korngröße für das Einsatzmaterial beträgt etwa 200 mm. Die Netto-Energieaufnahme der Trommel ist die auf den Trommelmantel übertragene Energie, d.h. die Energieaufnahme der Trommel in gefülltem Zustand minus der Energieaufnahme im Leerzustand. Die Netto-Energieaufnahme ist auf den Durchsatz an trockenem Boden bezogen. Der optimale Wert für die Energieaufnahme in dem erfindungsgemäßen Bereich richtet sich nach der Art des Bodens und der Verunreinigungen. Er wird empirisch ermittelt. Vorzugsweise liegt die untere Grenze der Energieaufnahme über 6 kWh/t Durchsatz, da dann im allgemeinen bessere Ergebnisse erzielt werden. "D" ist der Durchmesser der Trommel in Metern. Eine Trommel für die Zerkleinerung von Erzen und ähnlichen Rohmaterialien ist aus N.L. Weiss "SME mineral processing handbook", Vol. 1, 1985, Society of Mining Engineers, New York, Seiten 3C-3, 3C-4, 3C-59, 3C-60, 3C-71, 3C-73, 3C-95 bekannt. Die Behandlung des Bodens in der Trommel erfolgt derart, daß ein starker Abrieb der Oberflächen der Körner erfolgt. Bei der dazu erforderlichen Energieaufnahme erfolgt zwangsläufig auch eine gewisse Kornzerkleinerung. Der Siebschnitt richtet sich ebenfalls nach der Art des Bodens und der Verunreinigungen und wird empirisch ermittelt. Das wäßrige Medium in der Trommel besteht im allgemeinen aus Wasser, vorzugsweise aus rückgeführtem Wasser aus nachfolgenden Stufen des Verfahrens. Die Siebung erfolgt zweckmäßigerweise auf einem Schwingsieb unter Besprühen mit rückgeführtem Wasser und/oder Frischwasser. Das Schwingsieb kann vom groben Korn durch vorherige Absiebung, z.B. durch einen am Austrag der Trommel angeordneten Siebkorb, entlastet werden. Aus der feineren Fraktion können vor der Entschlämmung ferromagnetische Bestandteile durch Magnetscheidung entfernt werden. Zur Entschlämmung der abgesiebten, feineren Fraktion sind Hydrozyklone besonders geeignet, wobei deren Unterlauf nochmals gewaschen wird, ehe er als gereinigter Boden abgeführt wird. Dies kann z.B. in einem Spiralklassierer unter Besprühen mit Frischwasser erfolgen. Die Entwässerung des Überlaufes der Hydrozyklone, in dem der Schlamm enthalten ist, kann mittels Eindickern, Zentrifugen oder Filtern erfolgen. Die bei den Entwässerungen anfallenden Wässer werden in die Trommel und eventuell in die Siebung zurückgeleitet. Ein Teil der Wässer wird in eine Abwasserreinigung geleitet. Wenn die Verunreinigungen des Bodens nur oder überwiegend aus Schwermetallen bestehen, kann auf diese Weise ohne weitere Behandlung der Schlammsuspension vor der Entwässerung ein gereinigter Boden und ein Schadstoffkonzentrat erzeugt werden. Bei der Siebung fallen etwa 5 - 15 % als sauberer Boden an. Bei der Entschlämmung fällt ein Schlamm kleiner etwa 0,063 mm an. Die Menge beträgt etwa 5 - 15 %. Durch den Grad der Entschlämmung kann der Reinigungsfaktor beeinflußt werden.

Eine Lösung dieser Aufgabe erfolgt erfindungsgemäß dadurch, daß die kontaminierten Böden in einer ersten Trommel mit einer Netto-Energieaufnahme von 1 bis 6 kWh/t Durchsatz unter Zusatz von losen Brocken nach Art von Mahlkörpern behandelt werden, wobei die Drehzahl 50 - 90 % der kritischen Drehzahl ($n_{krit}$) von

$$n_{krit} = \frac{42,4}{\sqrt{D}} \ (min^{-1})$$

beträgt, die aus der Trommel ausgetragene wäßrige Aufschlämmung durch Siebung in eine gröbere und eine feinere Fraktion getrennt wird, die gröbere Fraktion als gereinigte Fraktion abgeführt wird, die feinere Fraktion entschlämmt wird, der abgetrennte Schlamm nach einer Entwässerung als Schadstoffkonzentrat abgeführt wird, der entschlämmte Rest der feineren Fraktion in einer zweiten Trommel mit einer Netto-Energieaufnahme von 4 bis 16 kWh/t Durchsatz unter Zusatz von losen Brocken nach Art von Mahlkörpern behandelt wird, wobei die Drehzahl 50 - 90 % der kritischen Drehzahl ($n_{krit}$) von

$$n_{krit} = \frac{42,4}{\sqrt{D}} \ (min^{-1})$$

beträgt, die aus der zweiten Trommel ausgetragene zweite wäßrige Aufschlämmung entschlämmt wird, der abgetrennte Schlamm nach einer Entwässerung als Schadstoffkonzentrat abgeführt wird, und der entschlämmte zweite Rest der feineren Fraktion nach einer Entwässerung als gereinigter Boden abgeführt wird. Die Erläuterungen zu der vorstehenden Arbeitsweise treffen - mit Ausnahme der Angaben zu der Netto-Energieaufnahme für die erste Trommel und die Menge des bei der Entschlämmung anfallenden Schlammes - auch bei dieser Arbeitsweise zu. Vorzugsweise beträgt die Netto-Energieaufnahme in der ersten Trommel 1 bis 4 kWh/t.

Eine vorzugsweise Ausgestaltung besteht darin, daß die Drehzahl der Trommel 60 - 80 % der kritischen Drehzahl beträgt. Diese Drehzahl gibt besonders gute Reinigungseffekte durch die Behandlung in der Trommel.

Eine vorzugsweise Ausgestaltung besteht darin, daß die Siebung bei etwa 1 bis 2 mm erfolgt. In vielen Fällen ergibt dieser Siebschnitt eine gute Trennung in gereinigten Boden und Schadstoffkonzentrat.

Eine vorzugsweise Ausgestaltung besteht darin, daß der entschlämmte Rest der feineren Fraktion in einer Flotation behandelt wird, das Schaumprodukt als Schadstoffkonzentrat abgeführt wird, und der Unterlauf nach der Entwässerung als gereinigter Boden abgeführt wird. Bei der Arbeitsweise mit zwei hintereinandergeschalteten Trommeln erfolgt die Flotation des entschlämmten Restes der feineren Fraktion aus der ersten Trommel nach dessen Behandlung in der zweiten Trommel in der aus der zweiten Trommel ausgetragenen zweiten wäßrigen Aufschlämmung. Das Schaum-Produkt der Flotation wird nach einer Entwässerung als Schadstoffkonzentrat abgeführt, der Unterlauf der Flotation wird entschlämmt, der abgetrennte Schlamm des Unterlaufes wird nach einer Entwässerung als Schadstoffkonzentrat abgeführt und der entschlämmte Rest des Unterlaufes als gereinigter Boden abgeführt. Die Entschlämmung des Unterlaufes der Flotation erfolgt zweckmäßigerweise wieder in einem Spiralklassierer mit nachgeschaltetem Hydrozyklon. Der im Hydrozyklon abgeschiedene Schlamm wird in den Eindicker geleitet. Diese Arbeitsweise wird insbesondere bei Böden angewendet, die Kohlenwasserstoffe und/oder Öl enthalten, wobei Schwermetalle ebenfalls im Schadstoffkonzentrat erfaßt werden. Als Flotationsmittel können Sammler wie Ölsäuren, Ölsäurederivate, Dieselöl, Amine und andere verwendet werden. Trotz des Zusatzes von Öl wird ein gereinigter Boden erzielt, der frei von Öl ist oder nur sehr geringe Mengen noch enthält. Unterlauf und Überlauf der Flotation werden zweckmäßigerweise zunächst in Eindickern entwässert und deren Unterläufe dann separat in Zentrifugen und Filtern entwässert.

Eine vorzugsweise Ausgestaltung besteht darin, daß als Brocken Stahlkugeln verwendet werden, und die Füllung der Trommel mit den Stahlkugeln bis zu maximal 40 Vol.-% im Ruhezustand beträgt. Bis zu diesem Füllungsgrad der Trommel im Ruhezustand werden gute Ergebnisse erzielt. Der untere Füllungsgrad sollte, je nach zu verarbeitendem Material, nicht unter 5 Vol.-% liegen.

Eine vorzugsweise Ausgestaltung besteht darin, daß 55 - 65 % der Stahlkugeln einen Durchmesser von etwa 20 - 30 mm haben und 45 - 35 % einen Durchmesser von größer 30 bis 100 mm haben. Mit diesen Größenverhältnissen werden sehr gute Ergebnisse erzielt.

Eine vorzugsweise Ausgestaltung besteht darin, daß als Brocken arteigenes und/oder nicht-arteigenes natürliches und/oder künstliches stückiges Material verwendet wird, und die Füllung der Trommel mit dem stückigen Material bis zu maximal 60 Vol.-% im Ruhezustand beträgt. Insbesondere wird arteigenes, grobes Material verwendet, das vor dem Einsatz des Bodens in die Trommel abgesiebt wird. Der untere Füllungsgrad der Trommel mit diesem Material sollte nicht unter 5 Vol.-% liegen. Da das stückige Material leichter ist als Stahlkugeln, muß der Trübestand in der Trommel niedriger gehalten werden als bei der Arbeitsweise mit Stahlkugeln, um die notwendige Energie durch das stückige Material zu übertragen.

Eine vorzugsweise Ausgestaltung besteht darin, daß das stückige Material eine Stückgröße von 60 - 200 mm hat. Diese Stückgröße ergibt gute Ergebnisse.

Eine vorzugsweise Ausgestaltung besteht darin, daß die Trommel an der Austragsseite mit einem Rost und Austragsschaufeln zur Regelung des Trübestandes in der Trommel ausgerüstet ist. Dadurch kann der Trübestand in der Trommel in einfacher Weise niedrig gehalten werden.

Eine vorzugsweise Ausgestaltung besteht darin, daß als Brocken Stahlkugeln und stückiges Material verwendet werden. Dadurch kann arteigenes Material als Brocken verwendet werden und durch die Stahlkugeln wird eine größere Energiemenge übertragen.

Eine vorzugsweise Ausgestaltung besteht darin, daß die Zugabe der Brocken in die Trommel so gesteuert wird, daß die Energieaufnahme der Trommel konstant bleibt. Dadurch können in einfacher Weise konstante Reinigungsergebnisse erzielt werden.

Eine Ausgestaltung besteht darin, daß der gereinigte Boden in einer zweiten Behandlungsstufe nochmals behandelt wird. Dadurch kann die Reinigungswirkung noch verstärkt werden.

Eine weitere Ausgestaltung besteht darin, daß die Netto-Energieaufnahme der Trommel in der zweiten Behandlungsstufe höher eingestellt wird als in der ersten Behandlungsstufe. Die Netto-Energieaufnahme in der ersten Behandlungsstufe wird so gewählt, daß in der zweiten Behandlungsstufe eine höhere Netto-Energieaufnahme im angegebenen Bereich erfolgen kann. Dadurch wird eine sehr gute Reinigung erzielt, wobei die höhere Energieaufnahme nur für einen kleineren Teil des Materials erforderlich ist.

Eine vorzugsweise Ausgestaltung besteht darin, daß die Siebung der aus der Trommel ausgetragenen wäßrigen Aufschlämmung in eine gröbere Fraktion mit größerer Korngröße, eine gröbere Fraktion mit kleinerer Korngröße und die feinere Fraktion erfolgt. Die Absiebung erfolgt vorzugsweise bei etwa 1 mm und bei etwa 6 mm. Manche Böden enthalten holzartige Bestandteile, die große Anteile von ölartigen Rückständen enthalten. Diese Bestandteile können in der gröberen Fraktion mit kleinerer Korngröße abgetrennt werden und separat aufgearbeitet werden, z.B. durch Zugabe in die zweite Trommel.

Eine besonders bevorzugte Ausgestaltung besteht darin, daß das Aufgabenmaterial in die Trommel 5 bis 40 Gew.-% mit einer Körnung kleiner 60 $\mu$m enthält. Es wurde überraschend gefunden, daß dadurch der restliche Schadstoffgehalt der gereinigten Fraktion besonders niedrig gehalten werden kann. Der Feinanteil kann aus der gleichen kontaminierten Bodensubstanz bestehen und eventuell durch vorheriges Aufmahlen erzeugt werden, oder es können auch andere feinkörnige Stoffe wie z.B. Kalkstein, Sand, Mergel, Ton, Kohle, Abfallkohle, gebrauchte Aktivkohle und Flotationswaschberge zugesetzt werden. Wenn Stoffe wie Kohle, Abfallkohle oder gebrauchte Aktivkohle zugesetzt werden, beträgt der Zusatz vorzugsweise 5 bis 20 %. Wenn andere Stoffe wie Kalkstein, Sand usw. zugesetzt werden, beträgt der Zusatz vorzugsweise 15 bis 30 %. Wenn die Behandlung des Bodens in zwei hintereinander geschalteten Trommeln erfolgt, kann der Feinanteil in die erste Trommel, in die zweite Trommel oder aufgeteilt in die erste und zweite Trommel aufgegeben werden. Vorzugsweise wird auf jeden Fall ein Teil des feinkörnigen Materials in die zweite Trommel aufgegeben, da dort kein oder wenig feinkörniges Material vorhanden ist. Der in die zweite Trommel aufgegebene Feinanteil soll nicht aus kontaminiertem Stoff bestehen, da sonst eine schlechtere Reinigung eintritt.

Eine weitere besonders bevorzugte Ausgestaltung besteht darin, daß zur Einstellung des Feinkorngehaltes kleiner 60 $\mu$m feinkörnige Mineralstoffe zugegeben werden, die mindestens eine Verbindung aus der Gruppe $SiO_2$, $Al_2O_3$, $CaO$ und $MgO$ enthalten, und die Menge und Zusammensetzung der zugegebenen feinkörnigen Stoffe so gewählt wird, daß aus dem Schadstoffkonzentrat bei einer thermischen Behandlung eine Schlackenphase gewünschter Zusammensetzung entsteht. Dadurch kann gleichzeitig neben der guten Reinigung eine für die Weiterverarbeitung des Schadstoffkonzentrates erforderliche günstige Schlackenzusammensetzung erzielt werden.

Eine weitere besonders bevorzugte Ausgestaltung besteht darin, daß das Schadstoffkonzentrat in einem Drehrohrofen durch thermische Behandlung in eine teigige bis flüssige Schlackenphase überführt wird und die Zusammensetzung des aufgegebenen Schadstoffkonzentrates so gewählt wird, daß eine Schlackenphase erzeugt wird, deren die Grundmasse ausmachenden Hauptbestandteile im Bereich von 60 bis 72 % $SiO_2$, 10 bis 30 % $Al_2O_3$ und 5 bis 25 % $CaO + MgO$ liegen, wobei die Summe von % $SiO_2$ + % $Al_2O_3$ + % $CaO$ + % $MgO$ = 100 % ist, und die Hauptbestandteile $SiO_2$, $Al_2O_3$, $CaO$ und $MgO$ zusammen mindestens 60 % des trockenen und glühverlustfreien, dem Drehrohrofen aufgegebenen Schadstoffkonzentrates betragen, die ausgetragene Schlackenphase abgekühlt und das Abgas des Drehrohrofens einer Reinigung unterzogen wird. Eine Aufarbeitung von kontaminierten Mineralstoffen durch thermische Behandlung im Drehrohrofen unter diesen Bedingungen ist Gegenstand der Patentanmeldung P 37 18 669.8. Durch diese Arbeitsweise kann gleichzeitig eine gute Reinigung der gröberen Fraktion erzielt werden, die Menge des im Drehrohrofen zu verarbeitenden Materials wird wesentlich verringert, die im Schadstoffkonzentrat enthaltenen Schadstoffe werden z.T. durch Verbrennung in unschädliche Stoffe umgewandelt, die verbleibenden Schadstoffe werden in der gebildeten Schlackenphase derart eingeschlossen und immobilisiert, daß die Schlacke entweder problemlos deponiert oder für verschiedene Zwecke, wie Geländeauffüllung, Straßen- und Dammbau, Bergversatz usw., verwendet werden kann.

Eine vorzugsweise Ausgestaltung besteht darin, daß der gereinigte Boden mit Mikroorganismen versetzt wird. Durch die Zugabe von Mikroben und Bakterien können in dem gereinigten Boden noch vorhandene Spuren von organischen Schadstoffen, wie Kohlenwasserstoffen, abgebaut werden. Dies kann durch Zugabe der Mikroorganismen bzw. mit Mikroorganismen imprägnierte Substrate am Ende des letzten Spiralklassierers auf einem Entwässerungsfilter für den gereinigten Boden oder bei einer eventuellen Zwischenlagerung oder nach Rückkofferung des Bodens erfolgen. In diesem Zusammenhang können noch Nährstoffe für die Mikroorganismen dem ohnehin feuchten und gut durchlüfteten aufbereiteten Boden zugeführt werden, um sicherzustellen, daß ein Höchstmaß von Nachreinigungseffekt auch über längere Zeit erreicht wird.

Die Erfindung wird anhand der Figuren näher erläutert.

Figur 1 zeigt eine einstufige Behandlung in einer Trommel.

Figur 2 zeigt eine zweistufige Behandlung in zwei hintereinander geschalteten Trommeln.

Figur 1:

Der kontaminierte Boden (1) wird auf dem Sieb (2) von Steinen und Schrott befreit. Die Steine (3) werden als dekontaminierter Boden (4) abgeführt. Der restliche kontaminierte Boden wird von der Bandwage (5) in die Trommel (6) chargiert. Die Trommel (5) ist an der Austragsseite mit Austragsschaufeln (7) und einem Siebkorb (8) ausgerüstet. Grobes Korn wird durch den Siebkorb (8) geleitet und über (9) als dekontaminierter Boden (4) abgeführt. Die ausgetragene Aufschlämmung fällt durch den Siebkorb (8) und wird über (10) auf das Schwingsieb (11) geleitet. Dort wird sie mit Frischwasser (12) und Rücklaufwasser (13) besprüht. Die gröbere Fraktion wird über (14) als dekontaminierter Boden (4) abgeführt. Die feinere Fraktion wird über (15) in den Magnetscheider (16) geleitet, wo Eisenschrott abgetrennt und über (17) abgeführt werden. Von der Pumpe (18) wird die feinere Fraktion über (19) in den ersten Hydrozyklon (20) geleitet. Der Überlauf wird über (21), Pumpe (22) und (23) in den zweiten Hydrozyklon (24) geleitet. Die Unterläufe aus beiden Hydrozyklonen werden über (25) in den Spiralklassierer (26) geleitet und mit Frischwasser (12a) besprüht. Die grobe Fraktion wird aus dem Spiralklassierer (26) über (27) als dekontaminierter Boden (4) abgeführt. Die Suspension wird über (28) zusammen mit dem Überlauf aus dem zweiten Hydrozyklon (24) über (29) in die Flotation (30) geleitet. Das Schaumprodukt wird über (31) in den Eindicker (32) geleitet. Der Unterlauf wird über (33) in den Eindicker (34) geleitet. Die Überläufe der Eindicker (32) und (34) werden über (35) und (36) in die Rückführleitung (36) geleitet. Der Unterlauf aus dem Eindicker (34) wird in die Zentrifuge (37) geleitet, aus welcher der Feststoff über (38) als Schadstoffkonzentrat (39) abgeführt und die Flüssigkeit über (40) in die Rückführleitung (36) geleitet wird. Aus dem Eindicker (32) wird der Unterlauf in die hyperbare Filtration (41) geleitet, aus welcher der Feststoff über (42) als Schadstoffkonzentrat (39) abgeführt und die Flüssigkeit über (43) in die Rückführleitung (36) geleitet wird. Aus der Rückführleitung (36) wird ein Teil in die Abwasserreinigung (44) geleitet, ein Teil über (45) in die Trommel (6) und ein Teil über (13) auf das Schwingsieb (11). Der Rückstand aus der Abwasserreinigung (44) wird über (45) als Schadstoffkonzentrat (39) abgeführt.

Figur 2:

Kontaminierter Boden (1) und Wasser (2) werden in die Trommel (3) chargiert. Die aus der Trommel ausgetragene Aufschlämmung wird über (4) auf das Doppelsieb (5) geleitet und dort mit Wasser (6) besprüht. Die gröbere Fraktion (7) mit einer Korngröße über 6 mm wird als dekontaminierter Boden abgeführt. Die gröbere Fraktion (8) mit einer Korngröße unter 6 mm und über 1 mm wird separat aufgearbeitet. Die feinere Fraktion mit einer Korngröße unter 1 mm wird über (9), Pumpe (10) und (11) auf den Spiralklassierer (12) aufgegeben und dort mit Wasser (13) besprüht. Die den Schlamm enthaltende Suspension wird über (14), Pumpe (15) und (16) in den Hydrozyklon (17) geleitet. Der Unterlauf des Hydrozyklons wird über (18) in die zweite Trommel (19) geleitet. Der aus dem Spiralklassierer ausgetragene entschlämmte Rest wird über (20) ebenfalls in die zweite Trommel (19) geleitet. Die den Schlamm enthaltende Suspension wird aus dem Hydrozyklon (17) über (21) in den Eindicker (22) geleitet. Über (23) wird Wasser in die zweite Trommel (19) aufgegeben. Die aus der zweiten Trommel (19) ausgetragene Aufschlämmung wird über (24) in die Flotation (25) geleitet und dort unter Zusatz von Flotationsreagenzien und Detergenzien flotiert. Das Schaumprodukt wird über (26) in den Eindicker (22) geleitet. Der Unterlauf aus der Flotation (25) wird über (27) in den Spiralklassierer (28) geleitet und dort mit Wasser (29) besprüht. Die den Schlamm enthaltende Suspension wird über (29), Pumpe (30) und (31) in den Hydrozyklon (32) geleitet. Der Unterlauf wird über (33) als dekontaminierter Boden abgeführt. Der vom Spiralklassierer (28) ausgetragene entschlämmte Rest wird über (34) als gereinigter Boden abgeführt. Die den Schlamm enthaltende Suspension wird aus dem Hydrozyklon (32) über (35) in den Eindicker (22) geleitet. Aus dem Eindicker (22) wird über (36) das entwässerte Schadstoffkonzentrat abgezogen. Über (37) wird das im Eindicker abgetrennte Wasser zur Abwasserreinigung geleitet.

Ausführungsbeispiele.

Ausführungsbeispiele 1 bis 4:

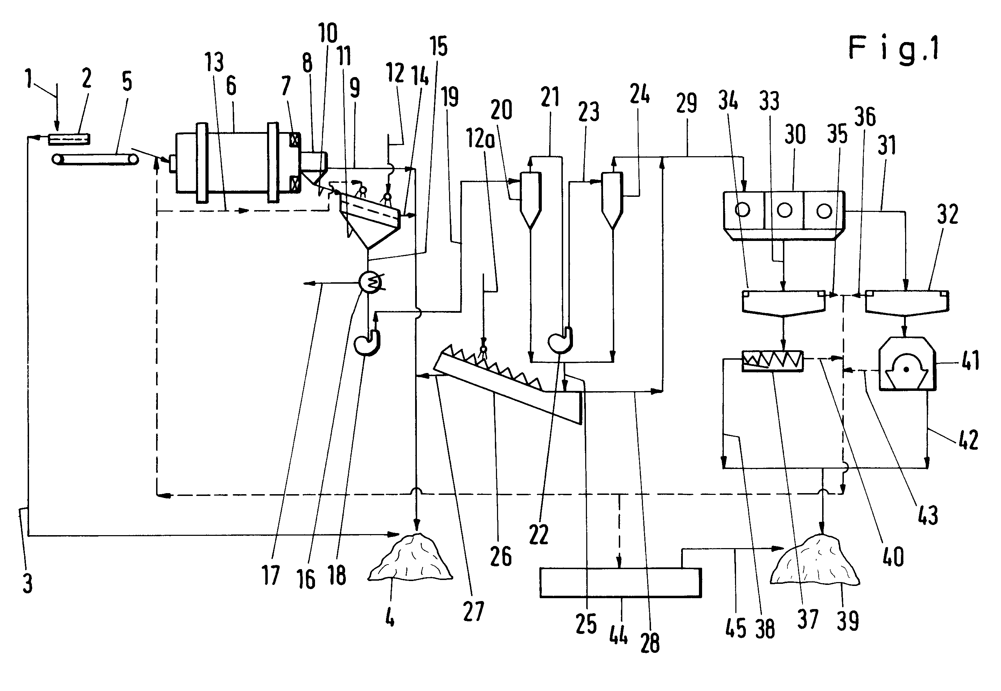

Es wurden drei verschiedene, mit Öl kontaminierte Böden nach dem Verfahrensschema gemäß Fig. 1, jedoch ohne Magnetscheidung, behandelt. Die Trommel war mit Stahlkugeln zu 35 % im Ruhezustand gefüllt. Bei der Flotation wurde Dieselöl zugesetzt. Die Böden in den Versuchen 1 und 2 stammten aus derselben Lage, hatte jedoch leichte Unterschiede im C-Gehalt. Die Angaben sind Gew.-%. Im Versuch 1 betrug die Netto-Energieaufnahme der Trommel 4 kWh/t und in allen anderen Versuchen 8 kWh/t.

|  |  | Gehalt % | | | Verteilung % | | |
|---|---|---|---|---|---|---|---|
|  | % | Öl | C | S | Öl | C | S |
| **V e r s u c h   1** |  |  |  |  |  |  |  |
| kontaminierter Boden | 100 | 3,4 | 6,8 |  | 100 | 100 |  |
| dekontaminierter Boden | 67,8 | 0,96 | 2,2 | 0,17 | 19,1 | 21,9 |  |
| Schadstoffkonzentrat | 32,2 | 8,5 | 16,5 |  | 80,9 | 78,1 |  |
| **V e r s u c h   2** |  |  |  |  |  |  |  |
| kontaminierter Boden | 100 | 3,4 | 6,2 | 0,40 | 100 | 100 |  |
| dekontaminierter Boden | 70,6 | 0,045 | 1,8 |  | 0,9 | 20,5 |  |
| Schadstoffkonzentrat | 29,4 | 11,4 | 16,7 |  | 99,1 | 79,5 |  |
| **V e r s u c h   3** |  |  |  |  |  |  |  |
| kontaminierter Boden | 100 | 0,41 | 2,2 | 0,09 | 100 | 100 | 100 |
| dekontaminierter Boden | 90,4 | 0,044 | 0,45 | 0,04 | 9,8 | 18,6 | 40,0 |
| Schadstoffkonzentrat | 9,6 | 3,85 | 18,6 | 0,56 | 90,2 | 81,4 | 60,0 |
| **V e r s u c h   4** |  |  |  |  |  |  |  |
| kontaminierter Boden | 100 | 0,67 | 8,9 | 0,17 | 100 | 100 | 100 |
| dekontaminierter Boden | 80 | 0,16 | 2,0 | 0,08 | 19,1 | 18,0 | 37,4 |
| Schadstoffkonzentrat | 20 | 2,7 | 36,5 | 0,54 | 80,9 | 82,0 | 62,6 |

Die Siebanalysen der dekontaminierten Böden waren wie folgt:

7

| Fraktion (mm) | Anteil Gew.-% | | |
|---|---|---|---|
| | Versuch 1 | Versuch 3 | Versuch 4 |
| größer 0,315 | 2,4 | 0,9 | 1,4 |
| 0,315 - 0,200 | 15,9 | 5,1 | 5,4 |
| 0,200 - 0,125 | 23,7 | 18,7 | 10,4 |
| 0,125 - 0,090 | 14,5 | 22,0 | 16,5 |
| 0,090 - 0,063 | 12,2 | 20,3 | 21,3 |
| 0,063 - 0,045 | 7,6 | 13,0 | 15,0 |
| kleiner 0,045 | 23,7 | 20,0 | 30,0 |

Die gereinigten Böden enthalten immer noch einen hohen Anteil der Kornfraktion kleiner 0,063 mm.

Ausführungsbeispiel 5:

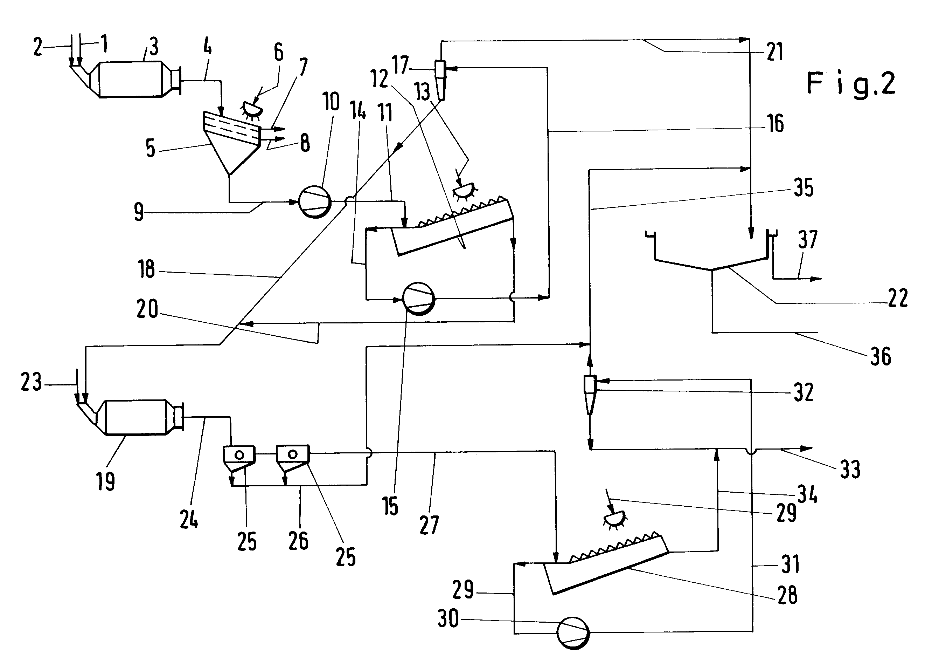

Es wurde ein mit Öl kontaminierter Boden nach dem Verfahrensschema gemäß Fig. 2 behandelt. Die erste Trommel war mit Steinbrocken aus dem Boden zu 35 % im Ruhezustand gefüllt. Die Netto-Energieaufnahme der Trommel betrug 2,5 kWh/t. Die zweite Trommel war mit Stahlkugeln zu 35 % im Ruhezustand gefüllt. Die Netto-Energieaufnahme der zweiten Trommel betrug 5 kWh/t. Bei der Flotation wurde emulgiertes Dieselöl als Sammler zugesetzt.

Die abgesiebte gröbere Fraktion mit einer Korngröße unter 6 mm und über 1 mm wurde in die zweite Trommel eingesetzt.

In der nachstehenden Tabelle ist der Gehalt der einzelnen Fraktionen an Schadstoffen angegeben, die in Petroläther löslich sind (PAL).

| | Gew. - % | PAL - % |
|---|---|---|
| Rohboden (1) | 100 | 0,81 |
| Fraktion über 6 mm (7) | 5,2 | 0,03 |
| Fraktion 1 bis 6 mm (8) | 6,6 | 1,68 |
| Schlamm nach 1. Hydrozyklon (17) | 17,3 | 1,74 |
| Flotations-Aufgabe (24) | 70,9 | 0,15 |
| Flotations-Schaum (26) | 3,1 | 2,86 |
| Schlamm nach 2. Hydrozyklon (32) | 4,0 | 0,30 |
| Schadstoffkonzentrat (36) | 24,4 | 2,8 |
| gereinigter Boden kleiner 1 mm (33) | 63,8 | 0,02 |

Der Rohboden enthielt 25 % mit einer Korngröße unter 0.06 mm.

Bei einer Zugabe von 5 % Kalkstein zu der entschlämmten Fraktion bei der Aufgabe in die 2. Trommel betrug PAL-% im gereinigten Boden (33) 0,017.

Die Vorteile der Erfindung bestehen darin, daß ein großer Teil der Verunreinigungen in einem kleinen Teil der Böden stark angereichert werden kann und die dekontaminierten Böden wieder verwendet werden können. Dadurch wird die Dekontaminierung des gesamten Bodens wesentlich wirtschaftlicher und ein großer Teil kann wieder verwendet werden. Der Feinstkornanteil unter 0,063 mm in den kontaminierten Böden kann beliebig hoch sein und auch hohe Tongehalte ergeben keine Schwierigkeit bei der Entwässerung.

**Patentansprüche**

**1.** Verfahren zur Aufbereitung von kontaminierten Böden durch Agitation in wäßriger Aufschlämmung in einer Trommel und Trennung des Austrages der Trommel in gröbere und feinere Fraktionen, dadurch gekennzeichnet, daß die kontaminierten Böden in einer Trommel mit einer Netto-Energieaufnahme von 4 bis 16 kWh/t Durchsatz unter Zusatz von losen Brocken nach Art von Mahlkörpern behandelt werden, wobei die Drehzahl 50 - 90 % der kritischen Drehzahl ($n_{krit}$) von

$$n_{krit} = \frac{42,4}{\sqrt{D}} \; (min^{-1})$$

beträgt, die aus der Trommel ausgetragene waßrige Aufschlämmung durch Siebung in eine gröbere und eine feinere Fraktion getrennt wird, die gröbere Fraktion als gereinigte Fraktion abgeführt wird, die feinere Fraktion entschlämmt wird, der abgetrennte Schlamm nach einer Entwässerung als Schadstoffkonzentrat abgeführt wird, und der entschlämmte Rest der feineren Fraktion nach einer Entwässerung als gereinigter Boden abgeführt wird.

2. Verfahren zur Aufbereitung von kontaminierten Böden durch Agitation in wäßriger Aufschlämmung in einer Trommel und Trennung des Austrages der Trommel in gröbere und feinere Fraktionen, dadurch gekennzeichnet, daß die kontaminierten Böden in einer ersten Trommel mit einer Netto-Energieaufnahme von 1 bis 6 kWh/t Durchsatz unter Zusatz von losen Brocken nach Art von Mahlkörpern behandelt werden, wobei die Drehzahl 50 - 90 % der kritischen Drehzahl ($n_{krit}$) von

$$n_{krit} = \frac{42,4}{\sqrt{D}} \; (min^{-1})$$

beträgt, die aus der Trommel ausgetragene wäßrige Aufschlämmung durch Siebung in eine gröbere und eine feinere Fraktion getrennt wird, die gröbere Fraktion als gereinigte Fraktion abgeführt wird, die feinere Fraktion entschlämmt wird, der abgetrennte Schlamm nach einer Entwässerung als Schadstoffkonzentrat abgeführt wird, der entschlämmte Rest der feineren Fraktion in einer zweiten Trommel mit einer Netto-Energieaufnahme von 4 bis 16 kWh/t Durchsatz unter Zusatz von losen Brocken nach Art von Mahlkörpern behandelt wird, wobei die Drehzahl 50 - 90% der kritischen Drehzahl ($n_{krit}$) von

$$n_{krit} = \frac{42,4}{\sqrt{D}} \; (min^{-1})$$

beträgt, die aus der zweiten Trommel ausgetragene zweite wäßrige Aufschlämmung entschlämmt wird, der abgetrennte Schlamm nach einer Entwässerung als Schadstoffkonzentrat abgeführt wird, und der entschlämmte zweite Rest der feineren Fraktion nach einer Entwässerung als gereinigter Boden abgeführt wird.

3. Verfahren nach Anspruch 1 oder Anspruch 2, dadurch gekennzeichnet, daß die Drehzahl der Trommel 60 - 80 % der kritischen Drehzahl beträgt.

4. Verfahren nach einem der Ansprüche 1 bis 3, dadurch gekennzeichnet, daß die Siebung bei etwa 1 bis 2 mm erfolgt.

5. Verfahren nach einem der Ansprüche 1 bis 4, dadurch gekennzeichnet, daß der entschlämmte Rest der feineren Fraktion in einer Flotation behandelt wird, das Schaumprodukt als Schadstoffkonzentrat abgeführt wird, und der Unterlauf nach der Entwässerung als gereinigter Boden abgeführt wird.

6. Verfahren nach einem der Ansprüche 1 bis 5, dadurch gekennzeichnet, daß als Brocken Stahlkugeln verwendet werden, und die Füllung der Trommel mit den Stahlkugeln bis zu maximal 40 Vol.-% im Ruhezustand beträgt.

7. Verfahren nach Anspruch 6, dadurch gekennzeichnet, daß 55 - 65 % der Stahlkugeln einen Durchmesser von etwa 20 - 30 mm haben und 45 - 35 % einen Durchmesser von größer 30 bis 100 mm haben.

8. Verfahren nach einem der Ansprüche 1 bis 7, dadurch gekennzeichnet, daß als Brocken arteigenes und/oder nicht-arteigenes natürliches und/oder künstliches stückiges Material verwendet wird, und die Füllung der Trommel mit dem stückigen Material bis zu maximal 60 Vol.-% im Ruhezustand beträgt.

9. Verfahren nach Anspruch 8, dadurch gekennzeichnet, daß das stückige Material eine Stückgröße von 60 - 200 mm hat.

10. Verfahren nach Anspruch 8 oder Anspruch 9, dadurch gekennzeichnet, daß die Trommel an der Austragsseite mit einem Rost und Austragsschaufeln zur Regelung des Trübestandes in der Trommel ausgerüstet ist.

11. Verfahren nach einem der Ansprüche 6 bis 10, dadurch gekennzeichnet, daß als Brocken Stahlkugeln und stückiges Material verwendet werden.

12. Verfahren nach einem der Ansprüche 1 bis 11, dadurch gekennzeichnet, daß die Zugabe der Brocken in die Trommel so gesteuert wird, daß die Energieaufnahme der Trommel konstant bleibt.

13. Verfahren nach Anspruch 1, dadurch gekennzeichnet, daß der gereinigte Boden in einer zweiten Behandlungsstufe nochmals behandelt wird.

14. Verfahren nach Anspruch 13, dadurch gekennzeichnet, daß die Netto-Energieaufnahme der Trommel in der zweiten Behandlungsstufe höher eingestellt wird als in der ersten Behandlungsstufe.

15. Verfahren nach einem der Ansprüche 1 bis 14, dadurch gekennzeichnet, daß die Siebung der aus der Trommel ausgetragenen wäßrigen Aufschlämmung in eine gröbere Fraktion mit größerer Korngröße, eine gröbere Fraktion mit kleinerer Korngröße und die feinere Fraktion erfolgt.

16. Verfahren nach einem der Ansprüche 1 bis 15, dadurch gekennzeichnet, daß das Aufgabenmaterial in die Trommel 5 bis 40 Gew.-% mit einer Körnung kleiner 60 $\mu$m enthält.

17. Verfahren nach Anspruch 16, dadurch gekennzeichnet, daß zur Einstellung des Feinkorngehaltes kleiner 60 $\mu$m feinkörnige Mineralstoffe zugegeben werden, die mindestens eine Verbindung aus der Gruppe $SiO_2$, $Al_2O_3$, CaO und MgO enthalten, und die Menge und Zusammensetzung der zugegebenen feinkörnigen Stoffe so gewählt wird, daß aus dem Schadstoffkonzentrat bei einer thermischen Behandlung eine Schlackenphase gewünschter Zusammensetzung entsteht.

18. Verfahren nach Anspruch 17, dadurch gekennzeichnet, daß das Schadstoffkonzentrat in einem Drehrohrofen durch thermische Behandlung in eine teigige bis flüssige Schlackenphase überführt wird und die Zusammensetzung des aufgegebenen Schadstoffkonzentrates so gewählt wird, daß eine Schlackenphase erzeugt wird, deren die Grundmasse ausmachenden Hauptbestandteile im Bereich von 60 bis 72 % $SiO_2$, 10 bis 30 % $Al_2O_3$ und 5 bis 25 % CaO + MgO liegen, wobei die Summe von % $SiO_2$ + % $Al_2O_3$ + % CaO + % MgO = 100 % ist, und die Hauptbestandteile $SiO_2$, $Al_2O_3$, CaO und MgO zusammen mindestens 60 % des trockenen und glühverlustfreien, dem Drehrohrofen aufgegebenen Schadstoffkonzentrates betragen, die ausgetragene Schlackenphase abgekühlt und das Abgas des Drehrohrofens einer Reinigung unterzogen wird.

19. Verfahren nach einem der Ansprüche 1 bis 18, dadurch gekennzeichnet, daß der gereinigte Boden mit Mikroorganismen versetzt wird.

**Claims**

1. A process for dressing contaminated soils by agitation in an aqueous slurry in a drum and separation of the discharge from the drum into relatively coarse and relatively fine fractions, characterised in that the contaminated soils are treated in a drum with a net energy consumption of 4 to 16 kWh/t throughput with the addition of loose chunks acting in the manner of grinding bodies, the speed of rotation being 50 - 90% of the critical speed ($n_{crit}$) of

$$n_{crit} = \frac{42.4}{\sqrt{D}} \ (min^{-1}),$$

the aqueous slurry discharged from the drum is separated by sieving into a relatively coarse and a relatively fine fraction, the relatively coarse fraction is removed as a purified fraction, the relatively fine fraction is desludged, the sludge which is separated off is removed as a pollutant concentrate after dewatering, and the desludged remainder of the relatively fine fraction is removed as purified soil after dewatering.

2. A process for dressing contaminated soils by agitation in an aqueous slurry in a drum and separation of the discharge from the drum into relatively coarse and relatively fine fractions, characterised in that the contaminated soils are treated in a first drum with a net energy consumption of 1 to 6 kWh/t throughput with the addition of loose chunks acting in the manner of grinding bodies, the speed of rotation being 50 - 90% of the critical speed ($n_{crit}$) of

$$n_{crit} = \frac{42.4}{\sqrt{D}} \ (min^{-1}),$$

the aqueous slurry discharged from the drum is separated by sieving into a relatively coarse and a relatively fine fraction, the relatively coarse fraction is removed as a purified fraction, the relatively fine fraction is desludged, the sludge which is separated off is removed as a pollutant concentrate after dewatering, the desludged remainder of the relatively fine fraction is treated in a second drum with a net energy consumption of 4 to 16 kWh/t throughput with the addition of loose chunks acting in the manner of grinding bodies, the speed of rotation being 50 - 90% of the critical speed ($n_{crit}$) of

$$n_{crit} = \frac{42.4}{\sqrt{D}} \ (min^{-1}),$$

the second aqueous slurry discharged from the second drum is desludged, the sludge which is separated off is removed as a pollutant concentrate after dewatering, and the desludged second remainder of the relatively fine fraction is removed as purified soil after dewatering.

3. A process according to Claim 1 or Claim 2, characterised in that the speed of the drum is 60 - 80% of the critical speed.

4. A process according to one of Claims 1 to 3, characterised in that the sieving takes place at about 1 to 2 mm.

5. A process according to one of Claims 1 to 4, characterised in that the desludged remainder of the relatively fine fraction is treated in a flotation stage, the froth product is removed as a pollutant concentrate and the underflow is removed as purified soil after dewatering.

6. A process according to one of Claims 1 to 5, characterised in that steel balls are used as chunks, and the drum is filled with the steel balls up to a maximum of 40% by volume when at rest.

7. A process according to Claim 6, characterised in that 55 - 65% of the steel balls have a diameter of about 20 - 30 mm and 45 - 35% have a diameter of above 30 to 100 mm.

8. A process according to one of Claims 1 to 7, characterised in that natural and/or synthetic lump material which is of the same kind or which is not of the same kind is used as chunks, and the drum is filled with the lump material up to a maximum of 60% by volume when at rest.

9. A process according to Claim 8, characterised in that the lump material has a particle size of 60 - 200 mm.

10. A process according to Claim 8 or Claim 9, characterised in that the drum on the discharge side is equipped with a grate and discharge blades for controlling the level of the slurry in the drum.

11. A process according to one of Claims 6 to 10, characterised in that steel balls and lump material are used as chunks.

**12.** A process according to one of Claims 1 to 11, characterised in that the addition of the chunks to the drum is controlled such that the energy consumption of the drum remains constant.

**13.** A process according to Claim 1, characterised in that the purified soil is treated once again in a second treatment stage.

**14.** A process according to Claim 13, characterised in that the net energy consumption of the drum in the second treatment stage is set higher than in the first treatment stage.

**15.** A process according to one of Claims 1 to 14, characterised in that the aqueous slurry discharged from the drum is sieved into a relatively coarse fraction with a relatively coarse grain size, a relatively coarse fraction with a relatively small grain size and the relatively fine fraction.

**16.** A process according to one of Claims 1 to 15, characterised in that 5 to 40% by weight of the material fed into the drum has a grain size of less than 60 $\mu$m.

**17.** A process according to Claim 16, characterised in that fine-grained mineral substances are added in order to adjust the fine grain content of less than 60 $\mu$m, which substances contain at least one compound from the group $SiO_2$, $Al_2O_3$, CaO and MgO, and the rate and composition of the fine-grained substances which are added are selected such that a slag phase of desired composition is produced from the pollutant concentrate upon thermal treatment.

**18.** A process according to Claim 17, characterised in that the pollutant concentrate is converted into a pasty to liquid slag phase in a rotary kiln by thermal treatment and the composition of the pollutant concentrate which is fed in is selected such that a slag phase is produced, the main constituents making up the matrix of which are in the range of 60 to 72% $SiO_2$, 10 to 30% $Al_2O_3$ and 5 to 25% CaO + MgO, the total of % $SiO_2$ + % $Al_2O_3$ + % CaO + % MgO being 100%, and the main constituents $SiO_2$, $Al_2O_3$, CaO and MgO together constitute at least 60% of the dry pollutant concentrate which is free of ignition losses and which is fed into the rotary kiln, the discharged slag phase is cooled and the waste gas of the rotary kiln is subjected to purification.

**19.** A process according to one of Claims 1 to 18, characterised in that microorganisms are mixed with the purified soil.

## Revendications

**1.** Procédé de traitement de sols contaminés, par agitation en suspension aqueuse dans une cuve tournante et séparation de la décharge de la cuve tournante en fractions plus grossières et en fractions plus fines, caractérisé en ce qu'on traite les sols contaminés dans une cuve tournante avec une consommation nette d'énergie de 4 à 16 kWh/t de quantité de matière, en présence de blocs en vrac du type éléments de broyage, la vitesse de rotation valant 50 à 90 % de la vitesse de rotation critique ($n_{crit}$):

$$n_{crit} = \frac{42{,}4}{\sqrt{D}} \ (\text{min}^{-1}),$$

on sépare, par tamisage, la suspension aqueuse extraite de la cuve tournante en une fraction plus grossière et une fraction plus fine, on évacue la fraction plus grossière à l'état de fraction purifiée, on débourbe la fraction plus fine, on élimine la boue séparée, après dessèchement, sous forme d'un concentré de substances polluantes, on évacue le résidu débourbé de la fraction plus fine, après dessèchement, sous forme de sol purifié.

**2.** Procédé de traitement de sols contaminés, par agitation en suspension aqueuse dans une cuve tournante et séparation de la décharge de la cuve tournante en fractions plus grossières et en fractions plus fines, caractérisé en ce qu'on traite les sols contaminés dans une première cuve tournante avec

EP 0 313 116 B1

une consommation nette d'énergie de 1 à 6 kWh/t de quantité de matière, en présence de blocs en vrac du type éléments de broyage, la vitesse de rotation valant 50 à 90 % de la vitesse de rotation critique ($n_{crit}$):

$$n_{crit} = \frac{42,4}{\sqrt{D}} \ (min^{-1}),$$

on sépare, par tamisage, la suspension aqueuse extraite de la cuve tournante en une fraction plus grossière et une fraction plus fine, on évacue la fraction plus grossière à l'état de fraction purifiée, on débourbe la fraction plus fine, on élimine la boue séparée, après dessèchement, sous forme d'un concentré de substances polluantes, on traite le résidu débourbé de la fraction plus fine dans une deuxième cuve tournante avec un consommation nette d'énergie de 4 à 16 kWh/t de quantité de matière, en présence de blocs en vrac du type éléments de broyage, la vitesse de rotation valant 50 à 90 % de la vitesse de rotation critique ($n_{crit}$):

$$n_{crit} = \frac{42,4}{\sqrt{D}} \ (min^{-1}),$$

on débourbe la deuxième suspension aqueuse extraite de la deuxième cuve tournante, on élimine la boue séparée, après dessèchement, sous forme d'un concentré de substances polluantes, et on évacue le deuxième résidu débourbé de la fraction plus fine, après dessèchement, sous forme de sol purifié.

3. Procédé selon la revendication 1 ou 2, caractérisé en ce que la vitesse de rotation de la cuve tournante vaut 60 à 80 % de la vitesse critique.

4. Procédé selon une des revendications 1 à 3, caractérisé en ce que la tamisage est réalisé à environ 1 à 2 mm.

5. Procédé selon une des revendications 1 à 4, caractérisé en ce que le résidu débourbé de la fraction plus fine est traité par flottation, le produit moussant est éliminé sous forme de concentré de substances polluantes et le courant inférieur, après dessèchement, est évacué à l'état de sol purifié.

6. Procédé selon une des revendications 1 à 5, caractérisé en ce qu'on utilise, comme blocs, des billes d'acier qui remplissent la cuve tournante jusqu'à un maximum de 40 % de son volume au repos.

7. Procédé selon la revendication 6, caractérisé en ce que 55 à 65 % des billes d'acier ont un diamètre de 20 à 30 mm et 45 à 35 % ont un diamètre allant de 30 à 100 mm.

8. Procédé selon une des revendications 1 à 7, caractérisé en ce qu'on utilise, comme blocs, un matériau en vrac naturel et/ou artificiel, spécifique et/ou non spécifique, et on remplit la cuve tournante avec ce matériau en vrac jusqu'à 60 % au maximum du volume de la cuve au repos.

9. Procédé selon la revendication 8, caractérisé en ce que le matériau en vrac est constitué de blocs de 60 à 200 mm.

10. Procédé selon la revendication 8 ou 9, caractérisé en ce que la cuve tournante est équipée, sur sa face de décharge, d'une grille et de pales de décharge pour régler la turbidité au sein de ladite cuve.

11. Procédé selon une des revendications 6 à 10, caractérisé en ce qu'on utilise, comme blocs, des billes d'acier et du matériau en vrac.

13

**12.** Procédé selon une des revendications 1 à 11, caractérisé en ce que l'addition des blocs dans la cuve est réglée de telle sorte que la consommation d'énergie par la cuve reste constante.

**13.** Procédé selon la revendication 1, caractérisé en ce que le sol purifié est traité encore une fois au cours d'une seconde étape de traitement.

**14.** Procédé selon la revendication 13, caractérisé en ce que la consommation d'énergie nette de la cuve tournante au cours de la deuxième étape de traitement est réglée à une valeur supérieure à celle de la première étape de traitement.

**15.** Procédé selon une des revendications 1 à 14, caractérisé en ce que le tamisage de la suspension aqueuse sortant de la cuve tournante fournit une fraction plus grossière à taille de grain plus grande, une fraction plus grossière à taille de grain plus petite, et la fraction plus fine.

**16.** Procédé selon une des revendications 1 à 15, caractérisé en ce que le matériau chargé dans la cuve contient de 5 à 40 % de matière dont la taille des grains est inférieure à 60 $\mu$m.

**17.** Procédé selon la revendication 16, caractérisé en ce que, pour le réglage d'une teneur en grains fins inférieure à 60 $\mu$m, on ajoute des substances minérales à grains fins qui renferment au moins un composé choisi dans le groupe formé par $SiO_2$, $Al_2O_3$, $CaO$ et $MgO$, et la quantité ainsi que la composition des substances à grains fins ajoutées est choisie de telle sorte qu'il se forme, par un traitement thermique du concentré de substances polluantes, une phase de scories de composition souhaitée.

**18.** Procédé selon la revendication 17, caractérisé en ce qu'on transforme le concentré de substances polluantes en une phase de scories pâteuse à liquide, par un traitement thermique dans un four tubulaire rotatif, on choisit la composition de la charge de concentré de substances polluantes de telle sorte qu'il se forme une phase de scories dont les constituants principaux, formant la masse de base, comprennent de 60 à 72 % de $SiO_2$, 10 à 30 % de $Al_2O_3$ et 5 à 25 % de $CaO + MgO$, la somme $SiO_2 + Al_2O_3 + CaO + MgO$, en pourcentages, étant égale à 100 % et les constituants principaux $SiO_2$, $Al_2O_3$, $CaO$ et $MgO$ valant ensemble au moins 60 % du concentré de substances polluantes, sec et sans perte au feu, chargé dans le four tubulaire rotatif, on refroidit la phase de scories déchargée et on soumet à une purification les gaz s'échappant du four tubulaire rotatif.

**19.** Procédé selon une des revendications 1 à 18, caractérisé en ce que le sol purifié est mélangé avec des microorganismes.

14

Fig.1

Fig.2

EP 0 313 116 B1